# EUROPEAN PATENT APPLICATION

(11) **EP 2 640 165 A1**
(43) Date of publication of application: **18.09.2013**
(21) Application number: 11840084.5
(22) Date of filing: 08.11.2011
(51) Int. Cl.: H05B 37/02

(54) **LED IGNITION APPARATUS AND LED LIGHTING APPARATUS**

(30) Priority: 14.04.2011 JP 2011090531; 12.11.2010 JP 2010254325
(71) Applicant: Toshiba Lighting&Technology Corporation, Yokosuka-shi, Kanagawa 237-8510 (JP)
(72) Inventor: ISHIKITA, Toru, Kanagawa (JP); SASAI, Toshihiko, Kanagawa (JP); KAMATA, Masahiko, Kanagawa (JP); NAKAJIMA, Hiromichi, Kanagawa (JP); IWAI, Naoko, Kanagawa (JP); TOMIYAMA, Sayaka, Kanagawa (JP)
(74) Representative: Bokinge, Ole
(86) International application number: PCT/JP2011/075713
(87) International publication number: WO 2012/063815

(57) **Abstract**

An LED lighting device includes a plurality of kinds of LEDs 1 and 2 having different color temperatures, an LED lighting circuit 3 configured to light each of the plurality of kinds of LEDs, and a control unit 4 configured to control an LED lighting circuit to simultaneously dimmably light the plurality of kinds of LEDs, subject the plurality of kinds of LEDs to dimming control through pulse width control in a deep dimming region where a dimming degree is equal to or lower than 20%, and subject the plurality of kinds of LEDs to the dimming control through amplitude control in other dimming regions.

## Description

### Technical Field

The present invention relates to an LED lighting device that can perform toning and dimming and an LED luminaire including the LED lighting device.

### Background Art

Lighting a plurality of kinds of light sources such as LEDs having different color temperatures, mixing optical outputs of the light sources, and obtaining an optical output having an intermediate color temperature is referred to as toning. Changing the light outputs of the light sources is referred to as dimming. An LED lighting device can be configured to be capable of performing both of the toning and the dimming. It is possible to change, as desired, a color temperature during high-illuminance lighting and a color temperature during low-illuminance lighting using such an LED lighting device. In order to use an LED as a light source and light the LED, there is a method of supplying a continuous direct current (an amplitude control system) and a method of supplying a rectangular wave direct current (a pulse width control (PWM) system). If the amplitude of the continuous current is changed or if a duty ratio of the rectangular wave current is changed, an effective value of each of the electric currents changes. Therefore, it is possible to perform dimming control for the LED through lighting by both the electric currents.

However, the pulse width control system has a problem in that a flicker phenomenon tends to occur during camera photographing and, when a current value is large, noise tends to occur. Therefore, it is undesirable to adopt the pulse width control system over an entire dimming region. On the other hand, in the amplitude control system, the flicker phenomenon and noise do not occur. However, it is found that, in the case of the LED, the color temperature of the LED greatly drops in a deep dimming region where a dimming degree is small. Therefore, there is a problem in that, in performing continuous dimming while performing the toning, if the dimming reaches the deep dimming region, the color temperature of the toning greatly shifts from a design value and a desired color temperature is not obtained. In the amplitude control system, if the current value decreases and deep dimming is performed, fluctuation tends to occur in brightness depending on the LED. On the other hand, in the case of the pulse width control system, it is considered that such a problem does not occur. Therefore, it is possible to overcome all the problems by supplying the continuous current to the LED in a region where the current value is large and the dimming is shallow and supplying the PWM current, which is a pulse width controlled rectangular wave, in a region where the current value is small and the dimming is deep.

According to the researches by the inventor, when an LED lighting device is configured to be capable of performing the dimming and the toning by switching the electric current supplied to the LED to the continuous current and the PWM current with reference to a predetermined threshold current, flickering of brightness tends to be perceived by a person if toning control is performed in a dimming region where a dimming level is deeper than the threshold. On the other hand, it is found that, if only the dimming control is performed, flickering of brightness is less easily perceived by a person.

The difference in the perception is considered to occur because, since a change in brightness does not occur if only the toning control is performed, when flickering in brightness occurs, the flickering in brightness tends to be perceived by a person and, on the other hand, since a change in brightness is involved if only the dimming control is performed, flickering of brightness is less easily perceived by a person.

The inventor also found that, as described above if the toning control is performed in the dimming region where the dimming level is deeper than the threshold, flickering of brightness tends to be perceived by a person because the resolution of a PWM frequency is too low with respect to a deep dimming degree.

### Brief Description of the Drawings

Fig. 1 is a circuit block diagram of an LED lighting device according to a first embodiment.
Fig. 2 is a circuit diagram for explaining a feedback switching circuit that switches amplitude control and pulse width control for dimming according to the first embodiment.
Fig. 3 is a graph showing a relation between a dimming degree and brightness according to the first embodiment.
Fig. 4 is a graph for conceptually explaining continuous dimming and a current waveform in the continuous dimming in the amplitude control and the pulse width control according to the first embodiment.
Fig. 5 is a graph showing color temperature shifts of light emission of an LED in the amplitude control and the pulse width control according to the first embodiment.
Fig. 6 is a graph showing a correlation between dimming and toning of an LED lighting device according to a second embodiment.

### Description of Embodiments

According to an embodiment of the present invention, there is provided an LED lighting device including: a plurality of kinds of LEDs having different color temperatures; an LED lighting circuit configured to light each of the plurality of kinds of LEDs; and a control unit, capable of selectively performing dimming control for controlling the LED lighting circuit to change an electric current while simultaneously lighting the plurality of kinds of LEDs and maintaining substantially constant a ratio of electric currents supplied to the plurality of kinds of LEDs and toning control for controlling the LED lighting circuit to change the current ratio while maintaining substantially constant a sum of the electric currents supplied to the plurality of kinds of LEDs, and configured to supply a PWM current to the LEDs in a region where a dimming degree of the plurality of kinds of LEDs is equal to or lower than 20%, which is a first predetermined value, in both the dimming control and the toning control and supply a continuous current to the LEDs if the dimming degree is higher.

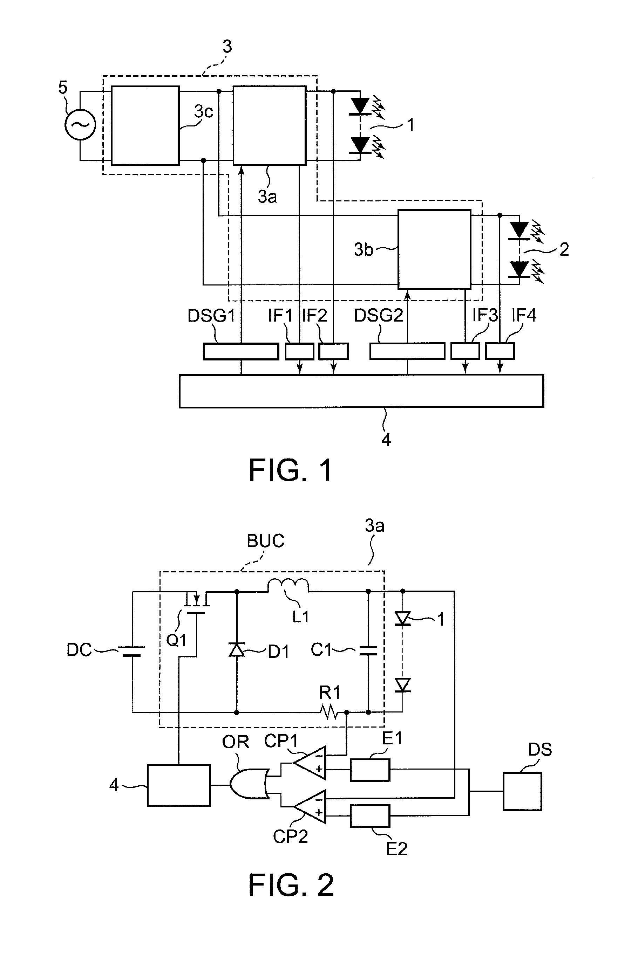

A first embodiment is explained with reference to Fig. 1. In this embodiment, an LED lighting device includes a plurality of kinds of, for example, first and second LEDs 1 and 2, a lighting circuit 3, and a control unit 4.

The plurality of kinds of LEDs 1 and 2 are different mainly in color temperatures. In the first LED 1, a light color of an optical output is, for example, relatively bluish, in other words, a W color having a relatively high color temperature and in a range of a correlated color temperature of 6020 to 7040 K. As an example, a 6700K LED is used as the first LED 1. Note that the color temperature may be obtained by a single kind of an LED or may be obtained by subjecting emitted lights of a plurality of kinds of LEDs having different light emission colors to additive mixture of color stimuli.

In the second LED 2, a light color of an optical output is, for example, relatively reddish, in other words, an L color having a relatively low color temperature and in a range of a correlated color temperature of 2580 to 2870 K. As an example, a 2800K LED is used as the second LED 2. Note that, as in the first LED 1, the color temperature may be obtained by a single kind of an LED or may be obtained by subjecting emitted lights of a plurality of kinds of LEDs having different light emission colors to additive mixture of color stimuli.

The number of the first and second LEDs 1 and 2 is not particularly limited. Therefore, one or an arbitrary plurality of LEDs can be, for example, connected to the lighting circuit 3 explained below in series or in series and parallel as appropriate and used. The number of the first LEDs 1 and the number of the second LEDs 2 may be equal or may not be equal.

It is possible to obtain mixed light colors having various color temperatures by mixing optical outputs of the first and second LEDs 1 and 2 and changing a color mixing ratio of the optical outputs. For example, it is possible to obtain illumination light having a correlated color temperature of 3200 to 3700 K located in the middle of the W color and the L color by setting the optical outputs of the first and second LEDs 1 and 2 equal and toning the optical output.

An input end of the lighting circuit 3 is connected to an alternating-current power supply 5. The first and second LEDs 1 and 2, which are loads, are connected to an output end of the lighting circuit 3. In order to light the first and second LEDs 1 and 2 separately from each other and, depending on a mode, in synchronization with each other, the lighting circuit 3 includes a first lighting circuit element 3a for the first LED 1 and a second lighting circuit element 3b for the second light source 2 and includes a common direct-current power supply 3c configured to supply direct-current power to the first lighting circuit element 3a and the second lighting circuit element 3b. However, each of direct-current power supplies may be distributedly arranged for each of the lighting circuit elements as desired.

The first and second lighting circuit elements 3a and 3b can light the first and second LEDs 1 and 2 to enable continuous dimming for the first and second LEDs 1 and 2. The first and second LEDs 1 and 2 are continuously dimmed in synchronization with each other according to the control by the control unit 4 explained below. However, the first and second LEDs 1 and 2 may be configured to be capable of being switched asynchronously as desired.

A specific circuit system of the lighting circuit 3 is not particularly limited in this embodiment. Therefore, it is possible to adopt a direct-current lighting circuit matching an LED. For example, a lighting circuit mainly including a DC-DC converter is used. As the DC-DC converter, for example, a circuit configuration for desirably subjecting a falling voltage chopper to constant current control and/or constant voltage control is adopted. Consequently, there are advantages that, for example, circuit efficiency is improved and control is easy.

In the falling voltage chopper, for example, if the lighting circuit element 3a in Fig. 1 is explained as an example, as shown in Fig. 2, a series circuit of a switching element Q1, an inductor L1, and an output capacitor C1 is connected between output ends of a direct-current power supply DC and, when the switching element Q1 is on, an increasing current, which linearly increases, is fed from the direct-current power supply DC to accumulate electromagnetic energy in the inductor L1. A series portion of a diode D1 and the output capacitor C1 is connected to the inductor L1 in parallel to form a closed circuit. When the switching element Q1 is off, a decreasing current, which linearly decreases, is caused to flow out from the inductor L1 to the closed circuit. The circuit operation explained above is repeated to output a stepped-down direct-current voltage to between both ends of the output capacitor C1. As it can be understood from the above, both the ends of the output capacitor C1 are output ends of the falling voltage chopper. Therefore, the first LED 1, which is a load, is connected to both the ends of the output capacitor C1 in parallel.

As indicated by the lighting circuit element 3a in Fig. 2 as an example, the LED lighting circuit 3 is configured to be capable of performing a dimming operation by amplitude control and a dimming operation by pulse width control while sharing a dimming region. In this example, the LED lighting circuit 3 performs current feedback in the case of the amplitude control and performs voltage control in the case of the pulse width control. For the current feedback, a resistor R1 for current detection is inserted in series in a circuit portion to which both of the increasing current flowing to the series circuit and the decreasing current of the closed circuit of the inductor L1, the output capacitor C1, and the diode D1 flow. A terminal voltage of the resistor R1 is detected for the current feedback. A terminal voltage of the output capacitor C1 is detected for voltage feedback. Detection signals of the respective detections are controlled to be input to the control unit 4 explained below through a circuit for switching shown in Fig. 2.

A current detection signal obtained from both the ends of the resistor R1 is input to one input end of a first comparator CP1. An output detection signal obtained from the output capacitor C1 is input to one input end of a second comparator CP2. An output end of a first reference value generating circuit E1 is connected to the other input end of the first comparator CP1. An output end of a second reference value generating circuit E2 is connected to the other input end of the second comparator CP2. A dimming signal DS is input to input ends of the first and second reference value generating circuits E1 and E2. The first reference value generating circuit E1 generates a reference voltage at the time when the dimming signal DS is in other dimming regions other than a deep dimming region where a dimming degree is equal to or lower than 20%. The second reference value generating circuit E2 generates a reference voltage at the time when the dimming signal is in the deep dimming region where the dimming degree is equal to or lower than 20%. Output signals of the first and second reference value generating circuits E1 and E2 are controlled to be input to the control unit 4 explained below through an OR circuit OR and contribute to feedback control of the amplitude control and the pulse width control corresponding to a dimming degree.

The control unit 4 is a unit configured to control the LED lighting circuit 3. However, the control unit 4 can at least subject lighting of the first and second LEDs 1 and 2 to dimming control. As the control of the LED lighting circuit 3 during dimming, the amplitude control and the pulse width control are switched and performed according to a dimming degree of the first and second LEDs 1 and 2. The amplitude control functions during dimming in the other regions other than the 20% or less deep dimming regions among all dimming regions. The pulse width control functions during dimming in the 20% or less dimming region, which is the deep dimming region.

In the amplitude control, an output current of the LED lighting circuit 3 is changed according to a dimming degree. In this case, if the reference voltage output by the reference value generating circuit E1 shown in Fig. 2 is changed according to a dimming signal, the control unit 4 operates in response to the change and changes an increasing current of the falling voltage chopper according to the dimming signal. Therefore, the output current of the LED lighting circuit 3 changes according to the dimming degree. As a result, the first and second LEDs 1 and 2 are dimmed according to the dimming degree.

On the other hand, in the pulse width control, if the reference voltage output by the reference value generating circuit E2 is changed according to the dimming signal, the control unit 4 intermittently stops the falling voltage chopper at a frequency lower than a switching frequency of the switching element Q1 by about one digit or more and forms an OFF period. Therefore, since a duty ratio, which is a ratio of on-duty in one period of time when an output of the falling voltage chopper is generated, changes, the output current of the LED lighting circuit 3 is subjected to the pulse width control. Consequently, a load current is subjected to the pulse width control according to a dimming degree. As a result of the circuit operation explained above, the first and second LEDs 1 and 2 are dimmed according to the dimming degree over all the dimming ranges.

The control unit 4 can be configured mainly by a microcomputer in order to facilitate the control of the first and second LEDs 1 and 2. In the embodiment shown in Fig. 1, the control unit 4 is configured manly by a microcomputer and configured to be capable of receiving the dimming signal DS transmitted through, for example, a remote controller as shown in Fig. 2. By using the remote controller, a user can easily select control operation for, for example, performing desired toning and dimming through manual remote control by the user or operation in an operation unit disposed on the wall surface.

In the embodiment shown in Fig. 1, reference signs IF1 to IF4 provided in the lighting circuit 3 denote interface circuits interposed between the lighting circuit 3 and the control unit 4 and provided to surely perform the control by the control unit 4 explained below. The interface circuits IF1 to IF4 are configured by current feedback interfaces IF1 and IF3 of the first and second lighting circuit elements and voltage feedback interfaces IF2 and IF4 of the first and second lighting circuit elements. Reference sign DSG1 denotes a driving signal generating circuit configured to drive the switching element of the first lighting circuit element 3a. Reference sign DSG2 denotes a driving signal generating circuit configured to drive the switching element of the second lighting circuit element 3b. Note that, in Fig. 1, a feedback switching circuit shown in Fig. 2 is not shown.

Further, the lighting circuit 3 includes load current detecting units and load voltage detecting units not shown in the figure. These units are included in respective circuit blocks of the first lighting circuit element 3a and the second lighting circuit element 3b. A detection output of the load current detecting unit of the first lighting circuit element 3a and a detection output of the load current detecting unit of the second lighting circuit element 3b are controlled to be input to the control unit 4 explained below respectively through the interface circuit IF1 and the interface circuit IF3. A detection output of the load voltage detecting unit of the first lighting circuit element 3a and a detection output of the load voltage detecting unit of the second lighting circuit element 3b are controlled to be input to the control unit 4 explained below respectively through the interface circuit IF2 and the interface circuit IF4.

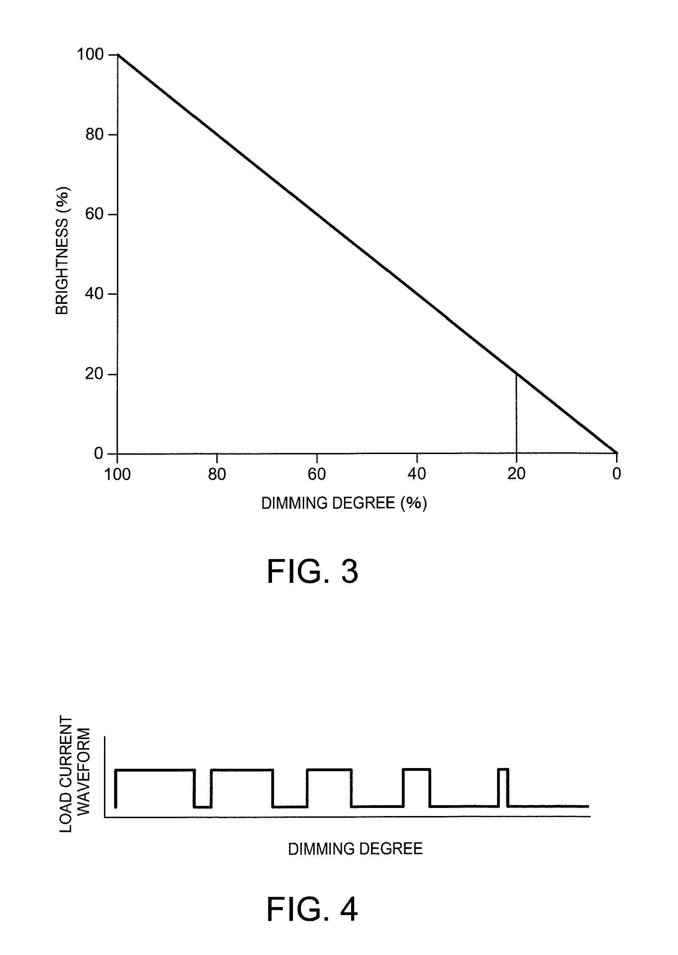

Next, a dimming control operation corresponding to a dimming degree is explained with reference to Figs. 3 to 5. First, a dimming region is explained with reference to Fig. 3. In this example, a dimming range of the plurality of kinds of LEDs 1 and 2 has a dimming region that coves full light, that is, a dimming degree of 100% to a dimming lower limit, for example, 1%. Note that, in the figure, the abscissa indicates a dimming degree (%) and the ordinate indicates brightness (%). A dimming characteristic indicating a relation between the dimming degree and the brightness is a straight line. In the figure, although the dimming lower limit is 1%, the dimming lower limit is drawn as a dimming degree of 0% because of a limit of illustration.

When the first and second LEDs 1 and 2 are continuously dimmed from the dimming degree of 100% to the dimming lower limit, at the dimming degree of 100% to the dimming degree right before 20%, the LED lighting circuit 3 performs a dimming operation by the amplitude control using the feedback switching circuit shown in Fig. 2. In the amplitude control, optical outputs of the LEDs 1 and 2 change according to the amplitude, i.e., a peak value of a load current of a flowing direct current.

When the dimming degree sequentially decreases and reaches the dimming degree of 20%, the feedback switching circuit shown in Fig. 2 is switched and the pulse width control is performed. In the pulse width control, as shown in Fig. 4, a waveform of the load current of the direct current flowing to the LEDs 1 and 2 is pulsed according to the dimming degree and a duty ratio of the load current changes according to the dimming degree. As a result, the load current changes according to the dimming degree and brightness changes.

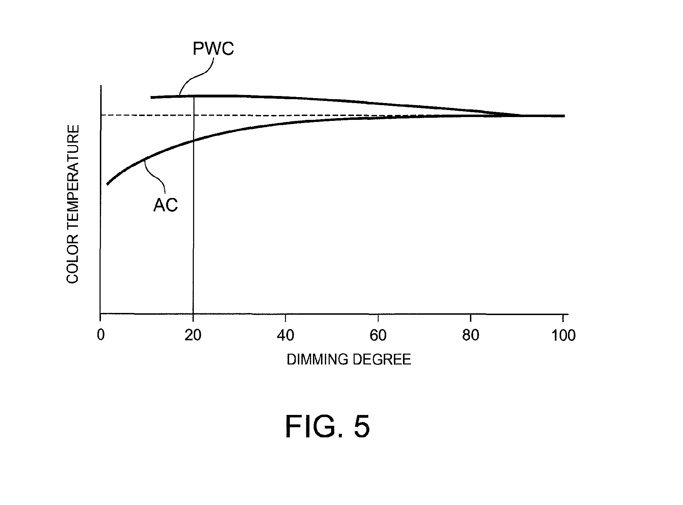

Fig. 5 is a graph showing a relation between a dimming degree and a color temperature of emitted lights of the LEDs 1 and 2. Not that, in the figure, the abscissa indicates a dimming degree (%) and the ordinate indicates a color temperature. In the figure, a graph AC indicates a relation in the case of the amplitude control and a graph PWC indicates a relation in the case of the pulse width control.

As it can be understood from the figure, the color temperature is generally fixed with respect to a change in the dimming degree in the case of the pulse width control. On the other hand, in the case of the amplitude control, a drop of the color temperature is relatively small up to the dimming degree of 20% with respect to a change in the dimming degree. However, in a region where the dimming degree is equal to or lower than 20%, the color temperature shows a substantial dropping tendency.

Therefore, in this embodiment, in a dimming region where the dimming degree exceeds 20%, the first and second LEDs 1 and 2 are subjected to the amplitude control, whereby a degree of a shift of the color temperature of toning involved in the change of the dimming degree is relatively small.

Note that, in this embodiment, the amplitude control operation and the pulse width control operation for the respective lighting circuit elements are explained according to the dimming degree. However, for example, when the color temperature is set relatively high in toning control, the first LED 1 is controlled by the amplitude control and the second LED 2 is controlled by the pulse width control. That is, when desired color mixing is performed by the first LED 1 and the second LED 2 to perform the toning control, if electric currents supplied from the respective lighting circuit elements to the respective LEDs in reproducing this desired color temperature are equal to or lower than 20% in terms of the dimming degree compared with a full light state, the pulse width control is performed as explained above in order to suppress a shift of the color temperature. This embodiment includes such a form as well.

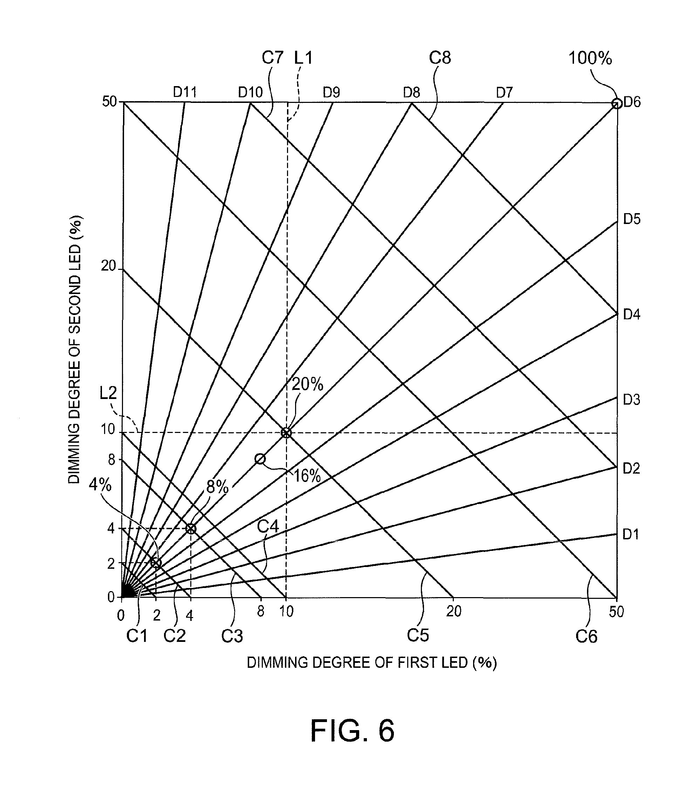

Next, a second embodiment is explained with reference to Fig. 6.

(1) According to this embodiment, the lighting circuit 3 is controlled such that both of the dimming control and the toning control can be selectively applied to the plurality of kinds of LEDs 1 and 2 as desired. In the dimming control, an electric current is changed, that is, the dimming control is performed while a ratio of electric currents respectively supplied to the plurality of kinds of LEDS 1 and 2 from the lighting circuit 3 is maintained substantially constant. In the toning control, the current ratio is changed, i.e., the dimming control is performed in directions opposite to each other while a sum of the electric currents respectively supplied to the plurality of kinds of LEDS 1 and 2 from the lighting circuit 3 is maintained substantially constant.

(2) In both the dimming control and the toning control, the electric currents supplied from the lighting circuit 3 to the plurality of kinds of LEDs 1 and 2 are a continuous current when the dimming degree is equal to or larger than a first predetermined value set as a threshold and are a PWM current when the dimming degree is equal to or smaller than the first predetermined value. The continuous current is a continuous direct current subjected to the amplitude control. The PWM current is a direct current of a rectangular wave subjected to the pulse width control. When dimming is deep and dimming by the continuous current is performed, the first predetermined value can be set by adding a moderate safety coefficient to a dimming degree at which an inconvenience such as a shift of a light emission color occurs. For example, it is desirable to set the first predetermined value in a range of a dimming degree of 15 to 25%. If the dimming degree is lower than 15%, the inconvenience such as a shift of a light emission color tends to occur. If the dimming degree exceeds 25%, noise tends to occur. The range of the dimming degree of the first predetermined value indicates a degree of a dimming level, which is a lighting power level indicated by % when an optical output of the entire LED lighting device obtained when the entire plurality of kinds of LEDs 1 and 2 are lit with rated power is set to a dimming degree of 100% and a state in which supplied power is 0 and the entire LEDs 1 and 2 are not lit is set to 0%. Maximum values of dimming degrees of the respective first and second LEDs 1 and 2 corresponding to the dimming degree of 100% are respectively 50%. The first predetermined value for the dimming degrees is a half of the above and, therefore, is 7.5 to 12.5%.

(3) When the toning control is performed at a dimming degree equal to or smaller than a second predetermined value smaller than the first predetermined value, the frequency of the pulse width control is reduced. In this case, the second predetermined value is desirably set in a range of 5 to 8% with respect to the dimming degrees of the entire LED lighting device and the respective first and second LEDs 1 and 2. If the dimming degree is lower than 5%, a strobe effect tends to occur. If the dimming degree exceeds 8%, flickering tends to be perceived.

As a PWM frequency of the PWM current under the control in (2) above by the first predetermined value, for example, about 500 Hz to 1 kHz adopted in general and, preferably, about 800 Hz can be adopted. On the other hand, a PWM frequency of the PWM current in the case of the dimming degree equal to or smaller than the second predetermined value is desirably set, for example, in a range of 100 to 400 Hz and, preferably, set to about 300 Hz.

Next, the control by the control unit 4 is explained in detail with reference to Fig. 6. Note that Fig. 2 is a graph showing a correlation between the dimming control and the toning control. The abscissa indicates a dimming degree (%) of the first LED 1 and the ordinate indicates a dimming degree (%) of the second LED 2. On the abscissa and the ordinate, the dimming degrees are not shown at equal intervals because a toning characteristic line explained below formed by fixing brightness subjected to spectral luminous efficiency correction is displayed to be a straight line.

A plurality of straight lines radially expanded centering on a point of a dimming degree of 0% on the abscissa and the ordinate in the figure are dimming characteristic curves D1 to D11 on which light colors obtained by changing a combination of dimming degrees and subjecting the first and second LEDS 1 and 2 to the dimming control are fixed but light mixing ratios are varied. Similarly, a plurality of straight lines extending from the upper left side to the lower right side in the figure and crossing the dimming characteristic lines are toning characteristic lines C1 to C8 on which brightness obtained by changing the dimming degrees opposite to each other and subjecting the first and second LEDs to the toning control is fixed but levels of the brightness are varied. In this embodiment, as the toning control, a form for performing stepwise operations to generate operating points only at intersections of the toning characteristic lines C1 to C8 and the dimming characteristic curves D1 to D11 is adopted. Consequently, it is possible to easily perform the toning control.

The dimming characteristic lines D1 to D11 are explained with reference to Fig. 6. For example, on the dimming characteristic line D6, a point of 100% at the upper right corner indicates that the entire LED lighting device is in a dimming state of 100%. At this time, the first and second LEDs 1 and 2 contribute by 50% each. Similarly, an intersection of 20% indicates the entire LED lighting device is in a dimming state of 20%. The first and second LEDs 1 and 2 contribute by 10% each. An intersection of 16% indicates that the entire LED lighting device is in a dimming state of 16%. The first and second LEDs 1 and 2 contribute by 8% each. An intersection of 8% indicates that the entire LED lighting device is in a dimming state of 8%. The first and second LEDs 1 and 2 contribute by 4% each. An intersection of 4% indicates that the entire LED lighting device is in a dimming state of 4%. The first and second LEDs 1 and 2 contribute by 2% each. As it can be understood from the above, the dimming characteristic line D6 indicates a dimming characteristic in performing the dimming control at a light mixing ratio of 1:1 and with a fixed light color. Similarly, the other dimming characteristic lines indicate a dimming characteristic at different light mixing ratios and with a fixed light color.

Next, the toning characteristic lines C1 to C8 are explained. For example, the toning characteristic line C6 is a toning characteristic line that connects a point of a dimming degree of 50% on the abscissa and a point of a dimming degree of 50% on the ordinate. An intersection of the dimming degree of 50% on the abscissa indicates that the entire LED lighting device in which only the first LED 1 is lit is in a toning state of the dimming degree of 50%. However, a light color at this time is a light color with emphasized blueness in the case of the LED 1 having the light emission color explained above. An intersection of the dimming degree of 50% on the ordinate indicates that the entire LED lighting device in which only the second LED 2 is lit is in a toning state of the dimming degree of 50%. However, likewise, a light color at this time is a light color with emphasized redness. That is, in the case of the toning characteristic line C6, a plurality of intersections with the dimming characteristic lines D1 to D11, the abscissa, and the ordinate are formed along the toning characteristic line C6. At the respective intersections, a light color changes because light mixing ratios are different from one another. In the entire LED lighting device, the toning control is always performed at the dimming degree of 50%, i.e., fixed brightness. Similarly, on the other toning characteristic lines, the toning control is performed at dimming degrees different from one another, i.e., fixed brightness. That is, the dimming degree is fixed to 20% on the toning characteristic line C5, the dimming degree is fixed to 10% on the toning characteristic line C4, the dimming degree is fixed to 8% on the toning characteristic line C3, the dimming degree is fixed to 4% on the toning characteristic line C2, and the dimming degree is fixed to 2% on the toning characteristic line C1. However, at the dimming level of 100% on the dimming characteristic line D6, since a toning characteristic line does not cross, it is indicated that the toning control cannot be performed.

In the case of the embodiment shown in Fig. 6, the LED lighting device is configured to, in the dimming control and the toning control, supply the continuous current to light the LEDs 1 and 2 in a state in which the dimming degree of the entire LED lighting device exceeds 20% (10% for the first or second LED) but, if the dimming degree of the LED 1 or 2 decreases to be equal to or lower than 10%, switch the continuous current supplied to at least the LED to the PWM current. Note that, for simplification of the lighting circuit 3, the LED lighting device can be configured to switch the entire LEDs 1 and 2 to the PWM current if the electric current of the one LED 1 or 2 decreases to be equal to or smaller than 10%. In this case, a dotted line L1 extending from 10% on the abscissa in the figure in parallel to the ordinate crosses the dimming characteristic lines D1 to D9. In respective dimming controls on the dimming characteristic lines D1 to D9, both the electric currents supplied to the first and second LEDs 1 and 2 are switched to the PWM current in a region with a low dimming ratio in a region closer to the ordinate from the intersections and the first and second LEDs 1 and 2 are lit.

Similarly to the above, a dotted line L2 extending from 10% on the ordinate in the figure in parallel to the abscissa crosses the dimming characteristic lines D4 to D11. In respective dimming controls on the dimming characteristic lines D4 to D11, both the electric currents supplied to the first and second LEDs 1 and 2 are switched to the PWM current in a region with a low dimming ratio in a region closer to the abscissa from the intersections and the first and second LEDs 1 and 2 are lit. With the configuration explained above, it is possible to suppress an inconvenience in which light colors of the first and second LEDs 1 and 2 undesirably shift. In this embodiment, the PWM frequency is 800 Hz.

In the case of the embodiment shown in Fig. 2, the LED lighting device is configured to, in the toning control at a dimming degree equal to or lower than 8% (the dimming degree is 8% with respect to 100% of the entire LED lighting device as well), switch the PWM frequency from 800 Hz to 300 Hz to light the first and second LEDs 1 and 2 in addition to the configuration explained above. That is, since the toning characteristic line C3 connecting the points of the dimming degree of 8% on the abscissa and the ordinate in the figure crosses the dimming characteristic lines D1 to D11, toning is switched at the respective intersections. If the PWM frequency is reduced in the toning switching, since the resolution of the pulse width control is increased, flickering of brightness tends to be perceived. Note that, likewise, in respective toning controls on the toning characteristic line C3 and the toning characteristic lines C1 and C2 in a region closer to the position of the dimming degree of 0 from the toning characteristic line 3, the PWM frequency of the PWM current supplied to the first and second LEDs 1 and 2 is switched to a low value.

In this embodiment, the LED lighting device includes forms explained below or is allowed to include the forms. These configurations can be appropriately adopted in the embodiments explained above as desired.

1. In the toning control, the PWM frequency decreases only in a changing process of the toning shifting from one intersection to the adjacent next intersection. After reaching a target level, the PWM frequency returns to the relatively high PWM frequency again. If the PWM frequency is low, a strobe effect undesirably occurs. However, by returning the PWM frequency to the original PWM frequency after reaching the target level, it is possible to suppress the occurrence of the strobe effect.

2. In the form for reducing the PWM frequency only in the changing process of the toning control and returning the PWM frequency to the original frequency after reaching the target level, the LED lighting device is configured to give an appropriate delay to time until the reduced PWM frequency returns to the original PWM frequency. Note that the delay time only has to be time longer than time of shifting between the intersections of the toning characteristic lines and the dimming characteristic lines during the switching. Then, at normal toning control speed, it is possible to suppress, before reaching the target level, the high and low PWM frequencies from causing chattering to cause flickering of brightness.

3. The LED lighting device can be configured not to change a duty of the pulse width control in switching the PWM frequency. In switching the PWM frequency, if the duty of the pulse width control changes, the dimming degree changes during the toning control and the LED lighting device gives a sense of discomfort to the user of the LED lighting device. According to this form, since the dimming degree does not change during the toning control, the LED lighting device does not give a sense of discomfort to the user of the LED lighting device.

4. The LED lighting device can be configured to change a duty of the pulse width control in switching the PWM frequency. When the PWM frequency is switched, if the light emission of the LED changes, it is possible to change a duty ratio of the pulse width control to compensate for the change. According to this form, the LED lighting device changes the duty of the pulse width control to thereby act to compensate for the change of the light emission of the LED. Therefore, the change in the light emission of the LED decreases. Note that the change in the light emission includes brightness and/or a light color.

The control unit 4 is configured to be capable of subjecting the PWM frequency to high-low switching control by controlling the driving signal generating circuits DSG1 and DSG2. Further, as desired, the control unit 4 is allowed to be configured to be capable of receiving the dimming signal DS transmitted through, for example, a remote controller. By using the remote controller, it is possible to easily select, through manual remote control by the user or operation in an operation unit disposed on the wall surface, control operation for, for example, performing desired toning and dimming.

In the first embodiment of the present invention, the dimming control by the amplitude control is performed in the dimming region where the dimming degree exceeds 20%. Therefore, a flicker phenomenon does not occur in camera photographing. The pulse width control is performed in the dimming region where the dimming degree is equal to or lower than 20%. Therefore, the dimming lower limit can be reduced to about 1% and a shift of color temperature involved in a change in the dimming degree decreases.

According to the second embodiment of the present invention, when the toning control is performed with both the electric currents supplied to the plurality of kinds of LEDs equal to or smaller than the second predetermined value smaller than the first predetermined value, the PWM frequency of the PWM current is reduced. Consequently, it is possible to provide the LED lighting device in which flickering of brightness is suppressed even if the toning control is performed in a region where the dimming degree is deeper.

Next, an embodiment of a luminaire is explained. In this embodiment, an LED luminaire includes an LED luminaire main body and the LED lighting device in the embodiment explained above disposed on the LED luminaire main body. In the above explanation, the LED luminaire is allowed to be various apparatuses including first and second LEDs. The LED luminaire main body means a remaining portion left after the LED lighting device is removed from the LED luminaire. The LED lighting circuit of the LED lighting device may be disposed in a position apart from the LED luminaire main body.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### Citation of Related Application

This application is based upon and claims the benefit of priority from prior Japanese Patent Application No. 2010-254325 filed on November 12, 2010 and prior Japanese Patent Application No. 2011-090531 filed on April 14, 2011, the entire contents of all of which are incorporated herein by reference.

### Reference Signs List

- 1: First LED
- 2: Second LED
- 3: LED lighting circuit
- 3a: First lighting circuit element
- 3b: Second lighting circuit element
- 3c: Direct-current power supply
- 4: Control unit
- 5: Alternating-current power supply
- DS: Dimming signal
- DSG1, DSG2, DSG3: Driving signal generating circuits
- IF1, IF2, IF3, IF4: Interfaces

## Claims

1. An LED lighting device comprising:
a plurality of kinds of LEDs having different color temperatures;
an LED lighting circuit configured to light each of the plurality of kinds of LEDs; and
a control unit, capable of selectively performing dimming control for controlling the LED lighting circuit to change an electric current while simultaneously lighting the plurality of kinds of LEDs and maintaining substantially constant a ratio of electric currents supplied to the plurality of kinds of LEDs and toning control for controlling the LED lighting circuit to change the current ratio while maintaining substantially constant a sum of the electric currents supplied to the plurality of kinds of LEDs, and configured to supply a PWM current to the LEDs in a region where a dimming degree of the plurality of kinds of LEDs is equal to or lower than 20%, which is a first predetermined value, in both the dimming control and the toning control and supply a continuous current to the LEDs if the dimming degree is higher.

2. The device according to claim 1, wherein the control unit controls the lighting circuit to reduce a PWM frequency of the PWM current in performing the toning control if both the dimming degrees of the plurality of kinds of LEDs are equal to or smaller than a second predetermined value smaller than the first predetermined value.

3. The device according to claim 2, wherein the control unit reduces the PWM frequency only in its changing process if the toning control is performed at the dimming degrees of the plurality of kinds of LEDs equal to or lower than the second predetermined value.

4. The device according to claim 2, wherein the control unit returns the PWM frequency reduced in a changing process of the toning control to an original PWM frequency through a delay time after the toning control reaches a target level.

5. The device according to claim 2, wherein the control unit does not change a duty ratio of pulse width control in switching the PWM frequency.

6. The device according to claim 2, wherein, if light emission of the LEDs changes according to switching of the PWM frequency, the control unit changes a duty ratio of pulse width control to compensate for the change.

7. A luminaire comprising:
a luminaire main body; and
the LED lighting device according to any one of claims 1 to 6 disposed in the luminaire main body.
